# EUROPÄISCHE PATENTSCHRIFT

(11) **EP 4 281 296 B1**
(45) Veröffentlichungstag und Bekanntmachung des Hinweises auf die Patenterteilung: **28.05.2025**
(21) Anmeldenummer: 21823754.3
(22) Anmeldetag: 29.11.2021
(51) Int. Cl.: B60C 11/03

(54) **FAHRZEUGLUFTREIFEN**
PNEUMATIC VEHICLE TYRE
PNEU DE VÉHICULE PNEUMATIQUE

(30) Priorität: 25.01.2021 DE 102021200629
(43) Veröffentlichungstag der Anmeldung: 29.11.2023
(73) Patentinhaber: Continental Reifen Deutschland GmbH, 30175 Hannover (DE)
(72) Erfinder: ECKE, Stefan, 30165 Hannover (DE); PAGAC, Lubomir, 30165 Hannover (DE); SOYYUECE, Atakan, 30165 Hannover (DE); ÖZÜDURU, Ahmet, 30165 Hannover (DE)
(74) Vertreter: Continental Corporation
(86) Internationale Anmeldenummer: PCT/DE2021/200209
(87) Internationale Veröffentlichungsnummer: WO 2022/156846

(56) Entgegenhaltungen:
- EP-A1- 2 748 017
- EP-A1- 3 300 926
- CN-U- 203 974 427
- DE-A1- 4 300 695
- US-A- 5 287 905
- US-A1- 2020 376 899
- US-S- D 472 517

## Beschreibung

Die Erfindung betrifft einen Fahrzeugluftreifen mit einem laufrichtungsgebunden ausgeführten Laufstreifen mit zumindest einer beidseitig von Umfangsrillen begrenzten mittleren Profilblockreihe mit Profilblöcken, welche durch in Draufsicht parallel zueinander verlaufende, in die Umfangsrillen einmündende Querrillen mit je einer Rillenmittellinie, zwei Rillenflanken und einem Rillengrund voneinander getrennt sind, wobei die Querrillen jeweils einen in die eine der Umfangsrillen einmündenden, zur axialen Richtung und bezogen auf die Rillenmittellinie unter einem Winkel von 5° bis 25° verlaufenden, ersten Rillenabschnitt und einen an diesen anschließenden, zur axialen Richtung gegensinnig zum ersten Rillenabschnitt geneigten zweiten Rillenabschnitt aufweisen, wobei die Rillenabschnitte beim Abrollen des Reifens bei Vorwärtsfahrt mit ihrem gegenseitigen Anschlussbereich zuerst in den Untergrund eintreten, wobei in jedem Profilblock eine in Draufsicht in Verlängerung des ersten Rillenabschnittes verlaufende, gegenüber diesem schmäler ausgeführte Zusatznut ausgebildet ist, welche sich zwischen der Querrille und der anderen der beiden Umfangsrillen erstreckt.

Ein derartiger Fahrzeugluftreifen ist beispielsweise aus der US 5 287 905 A bekannt. Dieser Fahrzeugluftreifen weist gemäß einer Ausführungsform eine laufrichtungsgebundene Profilierung mit zwei, jeweils beidseitig von Umfangsrillen begrenzten, mittleren Profilblockreihen mit in die Umfangsrillen einmündenden Querrillen und Profilblöcken auf. Die Querrillen setzen sich, in Draufsicht betrachtet, jeweils aus einem zur axialen Richtung unter einem Winkel von zirka 15° verlaufenden, in die eine Umfangsrille einmündenden, ersten Rillenabschnitt, einem an diesen anschließenden und zu diesem bezüglich der axialen Richtung gegensinnig geneigten, zweiten Rillenabschnitt und einem zum ersten Rillenabschnitt bezüglich der axialen Richtung gleichsinnig geneigten, in die andere Umfangsrille einmündenden, dritten Rillenabschnitt zusammen. In jedem Profilblock ist in Verlängerung des ersten Rillenabschnittes bzw. in Verlängerung des zweiten Rillenabschnittes jeweils eine schmale Zusatznut ausgebildet. Der Reifen soll unter Aufrechterhaltung einer guten Trockenperformance ein geringes Reifen-Fahrbahn-Geräusch aufweisen.

Aus der US 2020/0376899 A1 ist ein Fahrzeugluftreifen bekannt, welcher - mit Ausnahme der Laufrichtungsgebundenheit des Laufstreifens - einem Fahrzeugluftreifen der eingangs genannten Art entspricht. Der Laufstreifen weist vier Profilrippen auf, wobei eine der mittleren Profilrippen deutlich breiter als die weiteren Profilrippen ausgeführt ist. Die breiter ausgeführte, mittlere Profilrippe ist mit einem Rillenmuster aus sich kreuzenden Querrillen und Zusatzrillen versehen. Der Fahrzeugluftreifen soll eine gute Schneeperformance und ein gutes Ansprechverhalten auf Lenkkräfte aufweisen.

Aus der EP 3 300 926 A1 ist ein Fahrzeugluftreifen mit einem Laufstreifen mit zwei mittleren Profilblockreihen bekannt, welche jeweils durch Umfangsrillen begrenzt und durch Querrillen in Profilblöcke gegliedert sind, wobei sich die Querrillen in Richtung zur schulterseitigen Umfangsrille trichterförmig verbreitern. Die Querrillen weisen zwei unter einem stumpfen Winkel aneinander anschließende Rillenabschnitte auf, wobei im blockinnenseitigen Endabschnitt, des einen Rillenabschnittes eine Grundanhebung ausgebildet ist. In den Profilblöcken ist jeweils einen zwischen benachbarten Querrillen verlaufende Zusatznut ausgebildet, welche den jeweiligen Profilblock in zwei im Wesentlichen gleichgroße Blocksegmente gliedert., wobei sich die Zusatznut trichterförmig verbreitert und unter einem Winkel von 5° bis 15° zur Umfangsrichtung verläuft. Gemäß einer Ausführungsvariante ist der Laufstreifen laufrichtungsgebunden ausgeführt. Dieser Reifen soll sich als Ganzjahresreifen eignen und insbesondere im Hinblick auf seine Handlingeigenschaften, welche vor allem durch die Steifigkeit des Laufstreifens bestimmt ist, das Wasserdrainagevermögen sowie den Schneegriff ausbalanciert sein.

Bei Reifen der eingangs genannten Art sind vor allem die am Laufstreifen ausgebildeten Querrillen, welche durch ihre Rillenabschnitte zumindest einen Knick in ihrem Verlauf aufweisen, für gute Schneegriffeigenschaften, insbesondere bei Kurvenfahrt, mitverantwortlich. Durch die Rillenabschnitte ist der Drainageweg zu den Umfangsrillen verlängert und die Gefahr des Entstehens von Verwirbelungen im durchströmenden Wasser erhöht, sodass das Wasserdrainagevermögen der Querrillen - gegenüber knickfreien Querrillen - reduziert ist. Die aus der EP 3 300 926 A1 bekannten, in den Profilblöcken ausgebildeten Zusatznuten können das durch die gewinkelten Rillenabschnitte bedingte, reduzierte Wasserdrainagevermögen nicht im gewünschten Ausmaß ausgleichen.

Der Erfindung liegt daher die Aufgabe zugrunde, bei einem Fahrzeugluftreifen der ein eingangs genannten Art Maßnahmen zu setzen, die das reduzierte Wasserdrainagevermögen der Querrillen, welches in Aquaplaningsituationen durch die abgewinkelten "Drainagewege" verursacht wird, unter Beibehalten einer für gute Handlingeigenschaften erforderlichen Profilsteifigkeit optimal auszugleichen.

Gelöst wird die gestellte Aufgabe erfindungsgemäß dadurch, dass die Zusatznut gegenüber dem ersten Rillenabschnitt seichter ausgeführt ist, wobei der Rillengrund der Querrille einen sich über den kompletten zweiten Rillenabschnitt erstreckenden Grundabschnitt aufweist, welcher mit einem Endabschnitt in den ersten Rillenabschnitt hineinragt und mit einer bis zu den Rillenflanken reichenden, lokalen Vertiefung versehen ist, welche zumindest teilweise im Endabschnitt oder angrenzend an den Endabschnitt ausgebildet ist, wobei die Querrille im Bereich des Grundabschnittes außerhalb der lokalen Vertiefung am seichtesten ausgeführt ist.

Die Ausführung der Zusatznuten ist daher auf spezielle Weise auf die Laufrichtungsgebundenheit des Laufstreifens abgestimmt. Da diese Zusatznuten in Verlängerung des ersten Rillenabschnittes verlaufen wird von den Zusatznuten aufgenommenes Wasser verwirbelungsarm in die den ersten Rillenabschnitt der Querrille und von diesem in jene Umfangsrille abgeleitet, in welche dieser Rillenabschnitt mündet, sodass das Wasserdrainagevermögen deutlich erhöht ist.

Da die Zusatznuten schmäler und seichter als der ersten Rillenabschnitt ausgeführt sind, bleibt die für gute Handlingeigenschaften maßgebliche Steifigkeit der Profilblöcke erhalten. Die lokal seichteren Querrillen versteifen die Profilblockreihe und sind somit für die Handlingeigenschaften von Vorteil. Die lokale Vertiefung vergrößert im Bereich der Einmündung der Zusatznut, also in dem im Hinblick auf das Wasserdrainagevermögen kritischen Bereich, das Volumen der Querrille bzw. den Querrillenquerschnitt.

Gemäß einer bevorzugten Ausführung verläuft die Zusatznut, in Draufsicht betrachtet und bezogen auf ihre Nutmittellinie, zur axialen Richtung unter einem Winkel, welcher vom Winkel, unter welchem der erste Rillenabschnitt zur axialen Richtung verläuft, um höchstens 10°, insbesondere um höchstens 5°, besonders bevorzugt um höchstens 2°, abweicht. Diese Maßnahme trägt dazu bei, von der Zusatznut aufgenommenes Wasser schnell in den ersten Rillenabschnitt der Querrille abzuleiten und ist daher für das Wasserdrainagevermögen im Bereich der Querrille von zusätzlichem Vorteil.

Eine weitere bevorzugte Ausführung ist dadurch gekennzeichnet,
dass jeder Profilblock an den Querrillen eine beim Abrollen des Reifens bei Vorwärtsfahrt zuerst in den Untergrund eintretende, einlaufende Blockkante und eine auslaufende Blockkante aufweist, wobei die einlaufende Blockkante und die auslaufende Blockkante in jedem Rillenabschnitt je einen Blockkantenabschnitt aufweisen,
wobei die Zusatznut eine erste und eine zweite Nutkante aufweist,
wobei die erste Nutkante an den im ersten Rillenabschnitt befindlichen Blockkantenabschnitt der auslaufenden Blockkante und die zweite Nutkante an den im zweiten Rillenabschnitt befindlichen Blockkantenabschnitt der auslaufenden Blockkante anschließt.

Durch derart verlaufende Nutkanten fließt das Wasser von der Zusatznut besonders verwirbelungsarm bzw. weitgehend verwirbelungsfrei in die Querrille, sodass die Wasserdrainage weiter verbessert ist.

Bei der zuvor genannten bevorzugten Ausführung ist es aus den genannten Gründen von besonderem Vorteil, wenn die erste Nutkante, in Draufsicht betrachtet, in geradliniger Verlängerung des im ersten Rillenabschnittes befindlichen Blockkantenabschnittes verläuft, an welchen sie anschließt.

Gemäß einer weiteren bevorzugten Ausführung weist die Zusatznut in radialer Richtung eine Tiefe von 1,0 mm bis 2,0 mm, insbesondere von 1,3 mm bis 1,7 mm, und/oder eine Breite von 1,0 mm bis 2,0 mm, insbesondere von 1,3 mm bis 1,7 mm, auf. Auch diese Merkmale sind für eine gute Wasserdrainage günstig.

Für die Wasserdrainage ist es ferner günstig, wenn der zweite Rillenabschnitt mit dem ersten Rillenabschnitt - bezogen auf die Rillenmittellinie - einen Winkel von 100° bis 130°, bevorzugt von 110° bis 120°, besonders bevorzugt von 113° bis 117°, einschließt.

Bei der zuvor genannten bevorzugten Ausführung ist es von Vorteil, wenn die lokale Vertiefung - bezogen auf ihr Volumen - zumindest Großteils im zweiten Rillenabschnitt ausgebildet ist.

Ferner ist es bei der zuvor genannten bevorzugten Ausführung von Vorteil, wenn die lokale Vertiefung eine Tiefe von 0,5 mm bis 1,5 mm, insbesondere von 0,8 mm bis 1,2 mm, und/oder eine entlang der Rillenmittelinie ermittelte Länge von 1,5 mm bis 4,0 mm aufweist.

Darüber hinaus ist es bei der zuvor genannten bevorzugten Ausführung günstig, wenn der Endabschnitt des Grundabschnittes - bezogen auf die Rillenmittellinie m_{QR} - eine in die axiale Richtung projizierte Länge von 40% bis 60%, insbesondere von zumindest 50%, der auf analoge Weise ermittelten Länge des ersten Rillenabschnittes aufweist. Im Bereich außerhalb des Endabschnittes des Grundabschnittes verbleibt im ersten Rillenabschnitt ein tiefer ausgeführter Einmündungsbereich zur Umfangsrille, wodurch die Steifigkeit der Profilblockreihe und das Wasserdrainagevermögen der in ihr verlaufenden Querrillen besonders vorteilhaft ausbalanciert sind.

Außerdem ist es bei der zuvor genannten bevorzugten Ausführung von Vorteil, wenn der Grundabschnitt außerhalb der lokalen Vertiefung in einer in radialer Richtung ermittelten konstanten Tiefe von 40% bis 60% der Profiltiefe verläuft. Dies trägt zur Ausgewogenheit der erwähnten Eigenschaften bei.

Ferner ist es bei der zuvor genannten bevorzugten Ausführung günstig, wenn der Rillengrund der Querrille einen ausschließlich im ersten Rillenabschnitt verlaufenden Grundabschnitt aufweist, welcher zum Niveau der Profiltiefe in radialer Richtung höchstens einen Abstand von 1,0 mm bis 2,0 mm aufweist und vorzugsweise in Richtung zur Umfangsrille, in welche der ersten Rillenabschnitt einmündet, abfällt. Dieser Grundabschnitt befindet sich in dem zuvor erwähnten, tiefer ausgeführter Einmündungsbereich der Querrille zur Umfangsrille und ist für das Wasserdrainagevermögen der Querrille günstig.

Gemäß einer weiteren bevorzugten Ausführungsvariante verläuft der zweite Rillenabschnitt bis zu jener Umfangsrille, in welche der erste Rillenabschnitt nicht einmündet.

Gemäß einer alternativen bevorzugten Ausführungsvariante schließt an den zweiten Rillenabschnitt innerhalb der Profilblockreihe ein dritter Rillenabschnitt an, welcher bis zur Umfangsrille verläuft, in welche der erste Rillenabschnitt nicht einmündet, und welcher bezüglich der axialen Richtung gleichsinnig zum ersten Rillenabschnitt geneigt ist, wobei der dritte Rillenabschnitt vorzugsweise
a. schmäler als der erste Rillenabschnitt und schmäler als der zweite Rillenabschnitt ausgeführt ist und/oder
b. bezogen auf die Rillenmittellinie - zur axialen Richtung unter einem Winkel verläuft, welcher vom Winkel, unter welchem der erste Rillenabschnitt zur axialen Richtung verläuft, um höchstens 5° abweicht und/oder
c. mit dem zweiten Rillenabschnitt - bezogen auf die Rillenmittellinie - einen stumpfen Winkel einschließt und/oder
d. eine in die axiale Richtung projizierte, auf die Rillenmittellinie bezogene Länge von 15% bis 30%, insbesondere von 20% bis 25%, der in die axiale Richtung projizierten Breite der mittleren Profilblockreihe aufweist.

Der dritte Rillenabschnitt verleiht der Querrille einen zick-zack-förmigen Verlauf und ist vor allem für die Schneegriffeigenschaften von Vorteil. Günstiger Weise wird durch den dritten Rillenabschnitt das Wasserdrainagevermögen der Querrille bedingt durch die speziell verlaufenden Zusatznuten, welche, wie im Zusammenhang mit der Lösung der Aufgabe erläutert wurde, kaum beeinflusst. Die Zusatznuten verstärken nämlich vor allem den Eintrag von Wasser in den ersten Rillenabschnitt, während der dritte Rillenabschnitt an den zweiten Rillenabschnitt anschließt.

Ferner ist es für das Entwässerungsvermögen des Laufstreifens von Vorteil, wenn der erste Rillenabschnitt in eine die mittlere Profilblockreihe laufstreifenaußenseitig begrenzende Umfangsrille und die Zusatznut in eine die mittlere Profilblockreihe laufstreifeninnenseitig begrenzende Umfangsrille einmündet.

Weitere Merkmale, Vorteile und Einzelheiten der Erfindung werden nun anhand der Zeichnung, die schematisch Ausführungsbeispiele der Erfindung zeigt, näher beschrieben. Dabei zeigen
Fig. 1 eine vereinfachte Draufsicht auf einen in die Ebene abgewickelten Umfangsabschnitt eines Laufstreifens eines Fahrzeugluftreifens mit einer ersten Ausführungsvariante der Erfindung,
Fig. 2 eine vergrößerte Draufsicht auf das Detail Z₂ der Fig. 1,
Fig. 3 einen verkleinerten Schnitt entlang der Linie III-III der Fig. 2,
Fig. 4 einen verkleinerten Schnitt entlang der Linien IV-IV der Fig. 2,
Fig. 5 einen verkleinerten Schnitt entlang der Linie V-V der Fig. 2,
Fig. 6 einen verkleinerten Schnitt entlang der Linie VI-VI der Fig. 2,
Fig. 7 einen verkleinerten Schnitt entlang der Linie VII-VII der Fig. 2,
Fig. 8 einen verkleinerten Schnitt entlang der Linie VIII-VIII der Fig. 2 und
Fig. 9 eine Draufsicht auf einen Profilblock eines Laufstreifens mit einer zweiten Ausführungsvariante der Erfindung.

Gemäß der Erfindung ausgeführte Fahrzeugluftreifen sind Reifen für Kraftfahrzeuge, insbesondere für mehrspurige Kraftfahrzeuge, sowie vorzugsweise Reifen in Radialbauart für Personenkraftwagen, Vans oder Light-Trucks (Leichte LKWs mit zGM ≤ 7,5 t), wobei die Reifen zum Fahren unter winterlichen Fahrbedingungen vorgesehen sind.

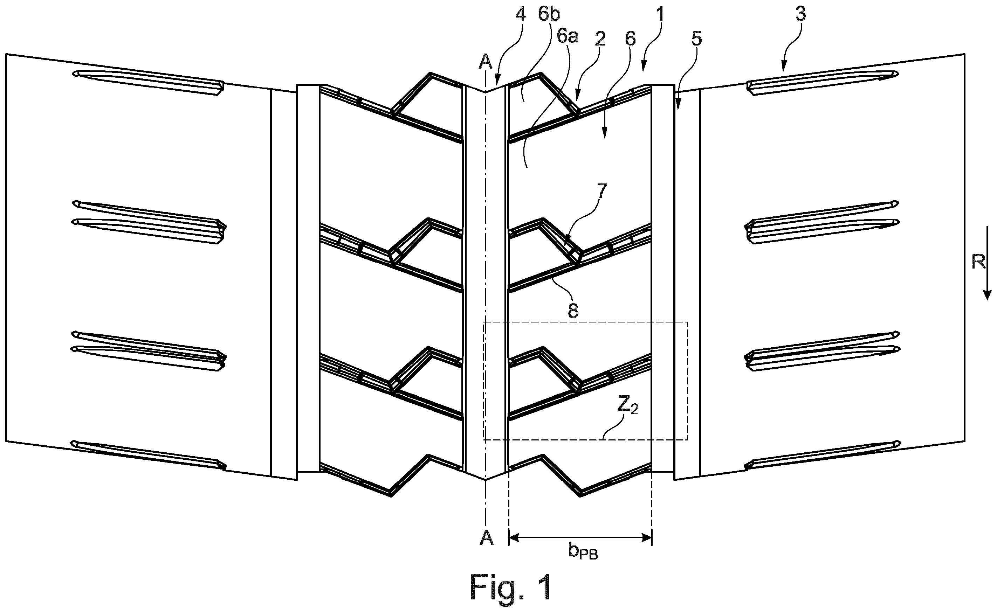

Fig. 1 zeigt einen Umfangsabschnitt eines Laufstreifens 1 eines Fahrzeugluftreifens. Der Laufstreifen 1 weist eine laufrichtungsgebunden ausgeführte Profilierung auf, wobei der Fahrzeugluftreifen derart am Fahrzeug zu montieren ist, dass er die durch den Pfeil R symbolisierte Abrollrichtung bei Vorwärtsfahrt aufweist. Die Reifenäquatorialebene ist durch eine gestrichelte Linie A-A angedeutet.

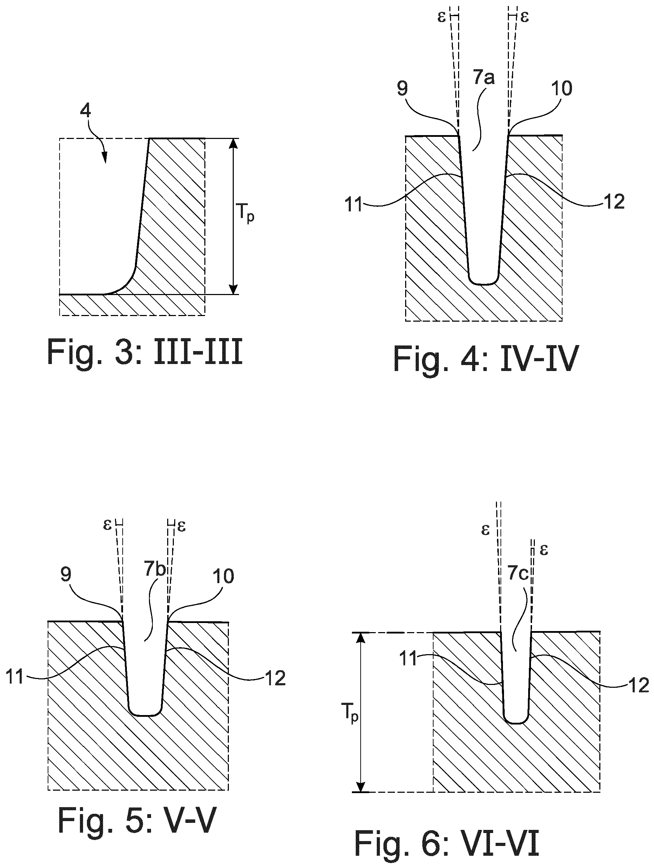

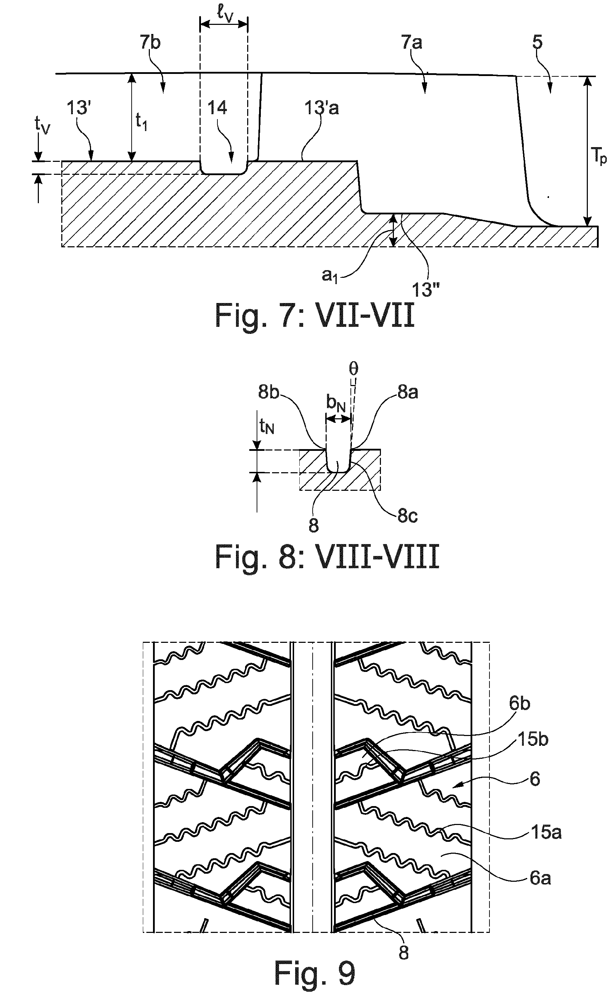

Der Laufstreifen 1 weist in jeder Laufstreifenhälfte eine mittlere Profilblockreihe 2 und eine schulterseitige Profilrippe 3 auf, wobei die schulterseitigen Profilrippen 3 lediglich schematisch dargestellt sind und in an sich bekannter Weise ausgeführt sein können. Die mittleren Profilblockreihen 2 sind voneinander durch eine in Draufsicht gerade sowie entlang der Reifenäquatorialebene (Linie A-A) verlaufende zentrale Umfangsrille 4 sowie von der jeweils benachbarten schulterseitigen Profilrippe 3 durch jeweils eine in Draufsicht gerade verlaufende, schulterseitige Umfangsrille 5 getrennt. Die Umfangsrillen 4, 5 sind in der jeweils vorgesehenen Profiltiefe T_{P} (Fig. 3, Fig. 7) ausgeführt, welche für den bevorzugten Reifentyp üblicherweise 6,5 mm bis 13,0 mm beträgt.

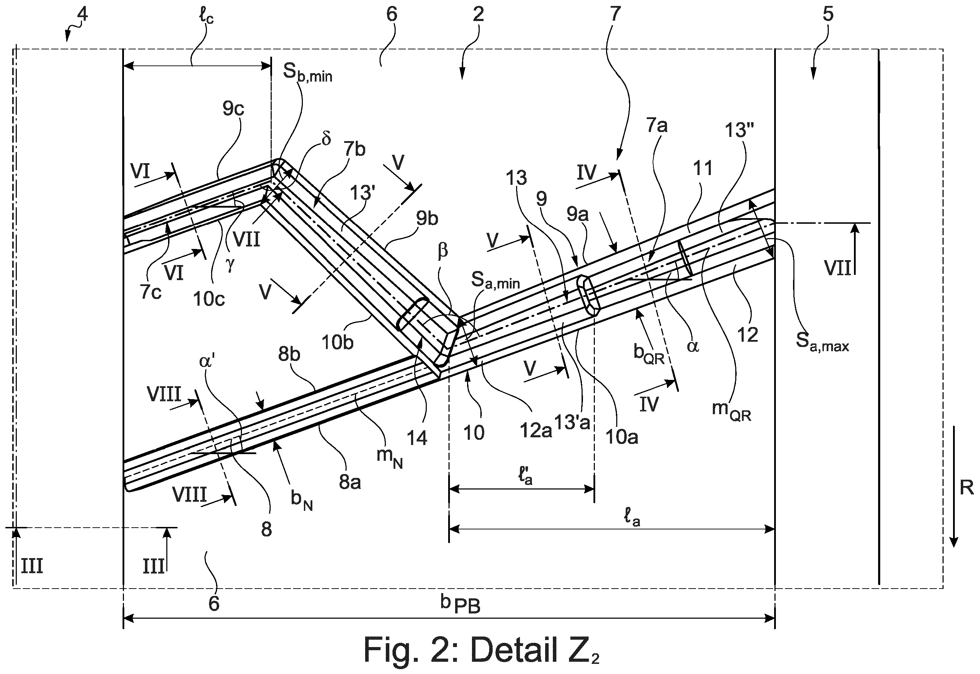

Jede mittlere Profilblockreihe 2 weist an der Laufstreifenperipherie in axialer Richtung eine Breite b_{PB} auf und ist durch eine Vielzahl von beim Ausführungsbeispiel in Draufsicht zick-zack-förmig sowie parallel zueinander verlaufenden Querrillen 7, welche zwischen der zentralen Umfangsrille 4 und der entsprechenden schulterseitigen Umfangsrille 5 verlaufen, in Profilblöcke 6 gegliedert. Die Querrillen 7 sind derart in den mittleren Profilblockreihen 2 ausgebildet, dass die eine mittlere Profilblockreihe 2 bezüglich der Reifenäquatorialebene (Linie A-A) symmetrisch zur anderen mittleren Profilblockreihe 2 ausgeführt ist. Die weitere Ausgestaltung der Profilblöcke 6 und der Querrillen 7 wird nachfolgend anhand einer einzelnen Querrille 7 und der an die Querrille 7 angrenzenden Profilblöcke 6 sowie unter Bezugnahme auf Fig. 2 bis Fig. 8 erläutert.

Gemäß Fig. 2 setzt sich die Querrille 7 aus einem in die schulterseitige Umfangsrille 5 einmündenden Rillenabschnitt 7a, einem beidseitig innerhalb der mittleren Profilblockreihe 2 endenden Rillenabschnitt 7b und einem in die zentrale Umfangsrille 4 einmündenden Rillenabschnitt 7c zusammen. Die dem Rillenverlauf folgende Rillenmittellinie m_{QR} (fällt mit der Schnittlinie VII-VII zusammen) ist eingezeichnet.

Der Rillenabschnitt 7a verläuft in Draufsicht betrachtet gerade sowie - bezogen auf die Rillenmittellinie m_{QR} - zur axialen Richtung unter einem Winkel α von 5° bis 25°, insbesondere von 10° bis 20°, bevorzugt von 13° bis 17°, und weist eine in die axiale Richtung projizierte, auf die Rillenmittellinie m_{QR} bezogene Länge lₐ von 40% bis 60%, insbesondere von 45% bis 55%, der Breite b_{PB} der mittleren Profilblockreihe 2 auf.

Der Rillenabschnitt 7b verläuft in Draufsicht betrachtet gerade, ist bezüglich der axialen Richtung gegensinnig zum Rillenabschnitt 7a geneigt und schließt mit diesem - bezogen auf die Rillenmittellinie m_{QR} - einen Winkel β von 100° bis 130°, bevorzugt von 110° bis 120°, besonders bevorzugt von 113° bis 117°, ein.

Die Neigung der Rillenabschnitte 7a, 7b ist dabei derart, dass beim Abrollen des Reifens bei Vorwärtsfahrt (Pfeil R) die aneinander anschließenden, blockinnenseitigen Abschnittenden der Rillenabschnitte 7a, 7b vor den anderen Abschnittenden in den Untergrund eintreten. Die Rillenabschnitte 7a, 7b treten daher über ihren gegenseitigen Anschlussbereich in den Untergrund ein.

Der Rillenabschnitt 7c verläuft in Draufsicht betrachtet ebenfalls gerade, ist bezüglich der axialen Richtung gleichsinnig zum Rillenabschnitt 7a geneigt, verläuft - bezogen auf die Rillenmittellinie m_{QR} - zur axialen Richtung unter einem Winkel γ, welcher vom Winkel α des Rillenabschnittes 7a um höchstens 5° abweicht, schließt mit dem Rillenabschnitt 7b - bezogen auf die Rillenmittellinie m_{QR} - einen stumpfen Winkel δ ein und weist eine in die axiale Richtung projizierte, auf die Rillenmittellinie m_{QR} bezogene Länge l_{c} von 15% bis 30%, insbesondere von 20% bis 25%, der Breite b_{PB} der mittleren Profilblockreihe 2 auf.

Die Profilblöcke 6 weisen jeweils an der einen angrenzenden Querrillen 7 (in Fig. 2 für eine Querrille 7 gezeigt) eine Blockkante 9 und an der anderen angrenzenden Querrille 7 eine Blockkante 10 auf, wobei beim Abrollen des Reifens bei Vorwärtsfahrt (Pfeil R) bei jedem Profilblock 6 die Blockkante 9 vor der Blockkante 10 in den Untergrund eintritt. Die Blockkante 9 wird daher nachfolgend auch als "einlaufende Blockkante 9" und die Blockkante 10 wird nachfolgend auch als "auslaufende Blockkante 10" bezeichnet. Die Blockkanten 9, 10 setzen sich jeweils aus einem im Rillenabschnitte 7a verlaufenden Blockkantenabschnitt 9a, 10a, einem im Rillenabschnitt 7b verlaufenden Blockkantenabschnitt 9b, 10b und einen im Rillenabschnitt 7c verlaufenden Blockkantenabschnitt 9c, 10c zusammen, wobei die Blockkantenabschnitte 9a, 9b, 9c, 10a, 10b, 10c in Draufsicht jeweils gerade verlaufen.

Die Querrille 7 weist eine zwischen den Blockkanten 9, 10 bzw. zwischen den entsprechenden Blockkantenabschnitten 9a, 9b, 9c, 10a, 10b, 10c in Draufsicht senkrecht zur Rillenmittellinie m_{QR} ermittelte Breite b_{QR} auf. Im Rillenabschnitt 7a nimmt die Breite b_{QR} von dem im Inneren der Profilblockreihe 2 liegenden Ende des Rillenabschnittes 7a in Richtung zur schulterseitigen Umfangsrille 5 über die Erstreckung der Blockkantenabschnitte 9a, 10a kontinuierlich ab, wobei die Breite b_{QR} im Rillenabschnitt 7a an der schmälsten Stelle S_{a,min} 2,5 mm bis 4,0 mm, insbesondere 3,5 mm bis 4,5 mm, und an der breitesten Stelle S_{a,max} 110% bis 130%, insbesondere 115% bis 125%, der Breite b_{QR} an der schmälsten Stelle S_{a, min} beträgt. Im Rillenabschnitt 7b nimmt die Breite b_{QR} in Richtung zum Rillenabschnitt 7c kontinuierlich ab, wobei die Breite b_{QR} im Rillenabschnitt 7b an der schmälsten Stelle S_{b,min} 85% bis 95% der Breite b_{QR} an der Stelle S_{a,min} beträgt. Im Rillenabschnitt 7c ist die Breite b_{QR} konstant sowie kleiner ausgeführt als an der Stelle S_{b,min} und beträgt mindestens 1,5 mm, bevorzugt mindestens 2,0 mm.

Die Querrille 7 ist über sämtliche Rillenabschnitte 7a, 7b, 7c durch eine von der einlaufenden Blockkante 9 ausgehende Rillenflanke 11, eine von der auslaufenden Blockkante 10 ausgehende Rillenflanke 12 und einen Rillengrund 13 begrenzt. Die Rillenflanken 11, 12 verlaufen, im senkrecht zur Rillenmittellinie m_{QR} ausgerichteten Querschnitt betrachtet, zur radialen Richtung unter einem Winkel ε (Fig. 4 bis Fig. 6) von 0° bis 7°, wobei der Winkel ε der Rillenflanken 11, 12 in den Rillenabschnitte 7a, 7b (Fig. 4, Fig. 5) vorzugsweise bis zu 5° und im Rillenabschnitt 7c (Fig. 6) vorzugsweise bis zu 3° beträgt.

Der Rillengrund 13 weist einen Grundabschnitt 13', welcher sich über die Rillenabschnitte 7c, 7b erstreckt und mit einem Endabschnitt 13'a in den Rillenabschnitt 7a hineinragt, und einen ausschließlich im Rillenabschnitt 7a verlaufenden Grundabschnitt 13" auf. Der Grundabschnitt 13' ist im Rillenabschnitt 7b mit einer in Draufsicht trapezförmigen, lokalen Vertiefung 14 versehen, welche an den Endabschnitt 13'a angrenzt. Alternativ kann die lokale Vertiefung 14 (vergl. Fig. 7) zumindest teilweise im Endabschnitt 13'a ausgebildet sein. Der Endabschnitt 13'a weist - bezogen auf die Rillenmittellinie m_{QR} - eine in die axiale Richtung projizierte Länge l'ₐ von 40% bis 60%, insbesondere von zumindest 50%, der Länge lₐ des Rillenabschnittes 7a auf. Wie Fig. 7 zeigt, verläuft der Grundabschnitt 13', inklusive seines Endabschnittes 13'a, im Bereich außerhalb der Vertiefung 14 in einer in radialer Richtung ermittelten konstanten Tiefe t₁ von 40% bis 60% der Profiltiefe T_{P}. Die Vertiefung 14 weist gegenüber dem Niveau des Grundabschnittes 13' in radialer Richtung eine Tiefe tv von 0,5 mm bis 1,5 mm, insbesondere von 0,8 mm bis 1,2 mm, sowie eine entlang der Rillenmittelinie m_{QR} am Niveau des Grundabschnittes 13'a ermittelte Länge Iv (vergl. Lage der Schnittlinie VII-VII in Fig. 2) von 1,5 mm bis 4,0 mm auf. Der ausschließlich im Rillenabschnitt 7a verlaufende Grundabschnitt 13" weist in seinem zum Endabschnitt 13'a des Grundabschnittes 13' nächstliegenden Bereich zum Niveau der Profiltiefe einen in radialer Richtung ermittelten Abstand a₁ von 1,0 mm bis 2,0 mm auf und fällt in Richtung der schulterseitigen Umfangsrille 5 auf die Profiltiefe T_{P} ab.

Wie Fig. 1 ferner zeigt, ist in jedem Profilblock 6 eine zwischen einer Querrille 7 und der zentralen Umfangsrille 4 verlaufende Zusatznut 8 ausgebildet, wobei die innerhalb einer mittlere Profilblockreihe 2 befindlichen Zusatznuten 8 in Draufsicht parallel zueinander verlaufen. Gemäß Fig. 2 verläuft die Zusatznut 8, in Draufsicht betrachtet, gerade sowie in Verlängerung des Rillenabschnittes 7a und mündet in den Rillenabschnitt 7b ein. Die Zusatznut 8 weist eine Nutmittellinie m_{N} und an der Peripherie des zugehörigen Profilblockes 6 zwei in Draufsicht gerade und parallel zueinander verlaufende Nutkanten 8a, 8b auf, wobei die Nutkante 8a an das im Inneren des Profilblockes 6 liegende Ende des Blockkantenabschnittes 10a anschließt und wobei die Nutkante 8b mit dem Blockkantenabschnitt 10b zusammentrifft. Die Zusatznut 8 verläuft, in Draufsicht betrachtet und bezogen auf eine Nutmittellinie m_{N}, zur axialen Richtung unter einem Winkel α', welcher vom Winkel α des ersten Rillenabschnitt 7a um höchstens 10°, insbesondere um höchstens 5°, besonders bevorzugt um höchstens 2°, abweicht. Beim gezeigten Ausführungsbeispiel ist der Winkel α' zwischen der Nutmittelinie m_{N} und der axialen Richtung derart gewählt, dass die Nutkante 8a in Draufsicht knickfrei an den Blockkantenabschnitt 10a anschließt und daher in geradliniger Fortführung von diesem verläuft.

Gemäß Fig. 8 ist die Zusatznut 8, im Querschnitt betrachtet, U-förmig ausgeführt, weist eine zwischen sowie in Draufsicht senkrecht zu den Nutkanten 8a, 8b ermittelte Breite b_{N} (vergl. Fig. 2) von 1,0 mm bis 2,0 mm, insbesondere von 1,3 mm bis 1,7 mm, eine in radialer Richtung ermittelte Tiefe t_{N} von 1,0 mm bis 2,0 mm, insbesondere von 1,3 mm bis 1,7 mm, sowie zwei von den Nutkanten 8a, 8b ausgehende Nutflanken 8c auf, welche im Querschnitt der Zusatznut 8 betrachtet, zur radialen Richtung unter einem Winkel θ von 0° bis 6°, insbesondere von zumindest 2°, verlaufen. Die Zusatznut 8 ist daher über ihre gesamte Erstreckung schmäler und seichter ausgeführt als der Rillenabschnitt 7a.

Wie bereits erläutert, verläuft die an die auslaufende Blockkante 10 anschließende Rillenflanke 12 der Querrille 7 im Rillenabschnitt 7a zur radialen Richtung unter einem Winkel ε (Fig. 4) und weist daher einen unter diesem Winkel verlaufenden, am Blockkantenabschnitt 10a anschließenden Rillenflankenabschnitte 12a (Fig. 2) auf. Bevorzugter Weise stimmt der Winkel ε des Rillenflankenabschnittes 12a mit dem Winkel θ (Fig. 8) der an die Nutkante 8a anschließenden Nutflanke 8c überein, sodass diese Nutflanke 8c in flächiger Fortsetzung des Rillenflankenabschnittes 12a verläuft, in diesen also knickfrei übergeht.

Wie Fig. 1 zeigt, gliedern die Zusatznuten 8 die Profilblöcke 6 jeweils in ein Blocksegment 6a und ein gegenüber diesem eine kleinere Außenfläche aufweisendes Blocksegment 6b. Das Blocksegment 6a ist von Abschnitten der Umfangsrillen 4, 5, einer Zusatznut 8, dem an diese anschließenden Rillenabschnitt 7a (vergl. Fig. 2) und der entsprechenden Querrille 7 begrenzt. Das Blocksegment 6b ist von einem Abschnitt der zentrale Umfangsrille 4, den Rillenabschnitten 7b, 7c einer Querrille 7 (vergl. Fig. 2) sowie der entsprechenden Zusatznut 8 begrenzt.

Fig. 9 zeigt eine Ansicht auf Profilblöcke 6, welche eine Variante des Profilblockes 6 gemäß dem ersten Ausführungsbeispiel (vergl. Fig. 1) darstellen und sich vom diesem jeweils dadurch unterscheiden, dass im Blocksegment 6a drei Einschnitte 15a und im Blocksegment 6b ein Einschnitt 15b ausgebildet ist. Die Einschnitte 15a verlaufen in Draufsicht betrachtet und bezogen auf die axiale Richtung gegensinnig zur Zusatznut 8 und durchqueren das Blocksegment 6a. Der Einschnitt 15b verläuft in Draufsicht betrachtet parallel zur Zusatznut 8. Die Einschnitte 15a, 15b weisen jeweils eine Breite von 0,4 mm bis 1,2 mm sowie in radialer Richtung an ihrer tiefsten Stelle eine Tiefe von 75% bis 100%, insbesondere von bis zu 95%, der Profiltiefe T_{P} (Fig. 3, Fig. 7).

Die Erfindung ist auf die beschriebenen Ausführungsbeispiele nicht beschränkt.

Insbesondere können sich die Querrillen 7 ausschließlich aus den Rillenabschnitten 7a, 7b zusammensetzen, sodass die Querrillen mit dem Rillenabschnitt 7b in die entsprechende Umfangsrille einmünden. Der Rillenabschnitt 7c ist somit optional. Außerdem können die Querrillen 7 eine konstante Breite aufweisen. Die Zusatznut 8 kann derart in Verlängerung des Rillenabschnittes 7a in die Querrille 7, genauer den Rillenabschnitt 7b, einmünden, dass die Zusatznut 8 den Blockkantenabschnitt 10b an seinem am Blockkantenabschnitt 10 liegenden Endabschnitt unterbricht und daher beide Nutkanten 8a, 8b an den Blockkantenabschnitt 10b anschließen. Bei dieser Ausführung schließt die Nutkante 8a also nicht an das Ende des Blockkantenabschnittes 10a an. Der Laufstreifen weist zumindest eine mittlere Profilblockreihe auf, die mit Querrillen und Zusatznuten auf die beschriebenen Weise versehen ist.

### Bezugsziffernliste

- 1: Laufstreifen
- 2: mittlere Profilblockreihe
- 3: schulterseitige Profilrippe
- 4: zentrale Umfangsrille
- 5: schulterseitige Umfangsrille
- 6: Profilblock
- 6a, 6b: Blocksegment
- 7: Querrille
- 7a: Rillenabschnitt
- 7b: Rillenabschnitt
- 7c: Rillenabschnitt
- 8: Zusatznut
- 8a, 8b: Nutkante
- 8c: Nutflanke
- 9: Blockkante
- 9a, 9b, 9c: Blockkantenabschnitt
- 10: Blockkante
- 10a, 10b, 10c: Blockkantenabschnitt
- 11: Rillenflanke
- 12: Rillenflanke
- 12a: Rillenflankenabschnitt
- 13: Rillengrund
- 13', 13": Grundabschnitt
- 13'a: Endabschnitt
- 14: Vertiefung
- 15a, 15b: Einschnitt
- R: Pfeil (Abrollrichtung)
- A-A: Linie (Reifenäquatorialebene)
- a₁: Abstand
- b_{PB}, b_{QR}, b_{N}: Breite
- lₐ, l'ₐ, l_{c}, l_{V}: Länge
- m_{N}: Nutmittellinie
- m_{QR}: Rillenmittellinie
- S_{a, min}, S_{b, min}: schmälste Stelle
- S_{a, max}: breiteste Stelle
- t₁,t_{N}: Tiefe
- T_{P}: Profiltiefe
- Z₂: Detail
- α, α', β, γ, δ, ε, θ: Winkel

## Patentansprüche

1. Fahrzeugluftreifen mit einem laufrichtungsgebunden ausgeführten Laufstreifen mit zumindest einer beidseitig von Umfangsrillen (4, 5) begrenzten mittleren Profilblockreihe (2) mit Profilblöcken (6), welche durch in Draufsicht parallel zueinander verlaufende, in die Umfangsrillen (4, 5) einmündende Querrillen (7) mit je einer Rillenmittellinie (m_{QR}), zwei Rillenflanken (11, 12) und einem Rillengrund (13) voneinander getrennt sind,
wobei die Querrillen (7) jeweils einen in die eine der Umfangsrillen (5) einmündenden, zur axialen Richtung und bezogen auf die Rillenmittellinie (m_{QR}) unter einem Winkel (α) von 5° bis 25° verlaufenden, ersten Rillenabschnitt (7a) und einen an diesen anschließenden, zur axialen Richtung gegensinnig zum ersten Rillenabschnitt (7a) geneigten zweiten Rillenabschnitt (7b) aufweisen, wobei die Rillenabschnitte (7a, 7b) beim Abrollen des Reifens bei Vorwärtsfahrt mit ihrem gegenseitigen Anschlussbereich zuerst in den Untergrund eintreten,
wobei in jedem Profilblock (6) eine in Draufsicht in Verlängerung des ersten Rillenabschnittes (7a) verlaufende, gegenüber diesem schmäler ausgeführte Zusatznut (8) ausgebildet ist, welche sich zwischen der Querrille (7) und der anderen der beiden Umfangsrillen (4) erstreckt,
**dadurch gekennzeichnet,**
**dass** die Zusatznut (8) gegenüber dem ersten Rillenabschnitt (7a) seichter ausgeführt ist, wobei der Rillengrund (13) der Querrille (7) einen sich über den kompletten zweiten Rillenabschnitt (7b) erstreckenden Grundabschnitt (13') aufweist, welcher mit einem Endabschnitt (13'a) in den ersten Rillenabschnitt (7a) hineinragt und mit einer bis zu den Rillenflanken (12, 13) reichenden, lokalen Vertiefung (14) versehen ist, welche zumindest teilweise im Endabschnitt (13'a) oder angrenzend an den Endabschnitt (13'a) ausgebildet ist, wobei die Querrille (7) im Bereich des Grundabschnittes (13') außerhalb der lokalen Vertiefung (14) am seichtesten ausgeführt ist.

2. Fahrzeugluftreifen nach Anspruch 1, **dadurch gekennzeichnet, dass** die Zusatznut (8), in Draufsicht betrachtet und bezogen auf ihre Nutmittellinie (m_{N}), zur axialen Richtung unter einem vom Winkel (α') verläuft, welcher vom Winkel (α), unter welchem der erste Rillenabschnitt (7a) zur axialen Richtung verläuft, um höchstens 10°, insbesondere um höchstens 5°, besonders bevorzugt um höchstens 2°, abweicht.

3. Fahrzeugluftreifen nach Anspruch 1 oder 2, **dadurch gekennzeichnet, dass** jeder Profilblock (6) an den Querrillen (7) eine beim Abrollen des Reifens bei Vorwärtsfahrt (Pfeil R) zuerst in den Untergrund eintretende, einlaufende Blockkante (9) und eine auslaufende Blockkante (10) aufweist, wobei die einlaufende Blockkante (9) und die auslaufende Blockkante (10) in jedem Rillenabschnitt (7a, 7b) je einen Blockkantenabschnitt (9a, 9b, 10, 10b) aufweisen,
wobei die Zusatznut (8) eine erste und eine zweite Nutkante (8a, 8b) aufweist,
wobei die erste Nutkante (8a) an den im ersten Rillenabschnitt (7a) befindlichen Blockkantenabschnitt (10a) der auslaufenden Blockkante (10) und die zweite Nutkante (8b) an den im zweiten Rillenabschnitt (7b) befindlichen Blockkantenabschnitt (10b) der auslaufenden Blockkante (10) anschließt.

4. Fahrzeugluftreifen nach Anspruch 3, **dadurch gekennzeichnet, dass** die erste Nutkante (8a), in Draufsicht betrachtet, in geradliniger Verlängerung des im ersten Rillenabschnittes (7a) befindlichen Blockkantenabschnittes (10a) verläuft, an welchen sie anschließt.

5. Fahrzeugluftreifen nach einem der Ansprüche 1 bis 4, **dadurch gekennzeichnet, dass** die Zusatznut (8) in radialer Richtung eine Tiefe (t_{N}) von 1,0 mm bis 2,0 mm, insbesondere von 1,3 mm bis 1,7 mm, und/oder eine Breite (b_{N}) von 1,0 mm bis 2,0 mm, insbesondere von 1,3 mm bis 1,7 mm, aufweist.

6. Fahrzeugluftreifen nach einem der Ansprüche 1 bis 5, **dadurch gekennzeichnet, dass** der zweite Rillenabschnitt (7b) mit dem ersten Rillenabschnitt (7a) - bezogen auf die Rillenmittellinie (m_{QR}) - einen Winkel (β) von 100° bis 130°, bevorzugt von 110° bis 120°, besonders bevorzugt von 113° bis 117°, einschließt.

7. Fahrzeugluftreifen nach einem der Ansprüche 1 bis 6, **dadurch gekennzeichnet, dass** die lokale Vertiefung (14) - bezogen auf ihr Volumen - zumindest Großteils im zweiten Rillenabschnitt (7b) ausgebildet ist.

8. Fahrzeugluftreifen nach einem der Ansprüche 1 bis 7, **dadurch gekennzeichnet, dass** die lokale Vertiefung (14) eine Tiefe (tv) von 0,5 mm bis 1,5 mm, insbesondere von 0,8 mm bis 1,2 mm, und/oder eine entlang der Rillenmittelinie (m_{QR}) ermittelte Länge (l_{V}) von 1,5 mm bis 4,0 mm aufweist.

9. Fahrzeugluftreifen nach einem der Ansprüche 1 bis 8, **dadurch gekennzeichnet, dass** der Endabschnitt (13'a) des Grundabschnittes (13') - bezogen auf die Rillenmittellinie m_{QR} - eine in die axiale Richtung projizierte Länge (l'ₐ) von 40% bis 60%, insbesondere von zumindest 50%, der auf analoge Weise ermittelten Länge (lₐ) des ersten Rillenabschnittes (7a) aufweist.

10. Fahrzeugluftreifen nach einem der Ansprüche 1 bis 9, **dadurch gekennzeichnet, dass** der Grundabschnitt (13') außerhalb der lokalen Vertiefung (14) in einer in radialer Richtung ermittelten konstanten Tiefe (t₁) von 40% bis 60% der Profiltiefe (T_{P}) verläuft.

11. Fahrzeugluftreifen nach einem der Ansprüche 1 bis 10, **dadurch gekennzeichnet, dass** der Rillengrund (13) der Querrille (7) einen ausschließlich im ersten Rillenabschnitt (7a) verlaufenden Grundabschnitt (13") aufweist, welcher zum Niveau der Profiltiefe (T₁) in radialer Richtung höchstens einen Abstand (a₁) von 1,0 mm bis 2,0 mm aufweist und vorzugsweise in Richtung zur Umfangsrille (5), in welche der ersten Rillenabschnitt (7a) einmündet, abfällt.

12. Fahrzeugluftreifen nach einem der Ansprüche 1 bis 11, **dadurch gekennzeichnet, dass** der zweite Rillenabschnitt (7b) bis zu jener Umfangsrille (4) verläuft, in welche der erste Rillenabschnitt (7a) nicht einmündet.

13. Fahrzeugluftreifen nach einem der Ansprüche 1 bis 11, **dadurch gekennzeichnet, dass** an den zweiten Rillenabschnitt (7b) innerhalb der Profilblockreihe (2) ein dritter Rillenabschnitt (7c) anschließt, welcher bis zur Umfangsrille (4) verläuft, in welche der erste Rillenabschnitt (7a) nicht einmündet, und welcher bezüglich der axialen Richtung gleichsinnig zum ersten Rillenabschnitt (7a) geneigt ist, wobei der dritte Rillenabschnitt (7) vorzugsweise
a. schmäler als der erste Rillenabschnitt (7a) und schmäler als der zweite Rillenabschnitt (7b) ausgeführt ist und/oder
b. bezogen auf die Rillenmittellinie (m_{QR}) - zur axialen Richtung unter einem Winkel (γ) verläuft, welcher vom Winkel (α), unter welchem der erste Rillenabschnitt (7a) zur axialen Richtung verläuft, um höchstens 5° abweicht und/oder
c. mit dem zweiten Rillenabschnitt (7b) - bezogen auf die Rillenmittellinie (m_{QR}) - einen stumpfen Winkel (δ) einschließt und/oder
d. eine in die axiale Richtung projizierte, auf die Rillenmittellinie (m_{QR}) bezogene Länge (l_{c}) von 15% bis 30%, insbesondere von 20% bis 25%, der in die axiale Richtung projizierten Breite (b_{PB}) der mittleren Profilblockreihe (2) aufweist.

14. Fahrzeugluftreifen nach einem der Ansprüche 1 bis 13, **dadurch gekennzeichnet, dass** der erste Rillenabschnitt (7a) in eine die mittlere Profilblockreihe (2) laufstreifenaußenseitig begrenzende Umfangsrille (5) und die Zusatznut (8) in eine die mittlere Profilblockreihe (2) laufstreifeninnenseitig begrenzende Umfangsrille (4) einmündet.

## Claims

1. Pneumatic vehicle tyre having a directional tread with at least one central row of profile blocks (2), delimited on both sides by circumferential grooves (4, 5), with profile blocks (6) which in top view are separated from one another by transverse grooves (7) that run parallel to one another and open into the circumferential grooves (4, 5) and have in each case one groove centreline (m_{QR}), two groove flanks (11, 12) and one groove base (13),
wherein the transverse grooves (7) have in each case a first groove portion (7a) which opens into the one of the circumferential grooves (5) and in relation to the axial direction and in terms of the groove centreline (m_{QR}) runs at an angle (α) of 5° to 25°, and adjoining thereto a second groove portion (7b) which in the axial direction is inclined opposite to the first groove portion (7a),
wherein the groove portions (7a, 7b) by way of their mutual connection region enter the ground first when the tyre rolls during forward travel,
wherein formed in each profile block (6) is an additional groove (8) which, in top view, runs as an extension of the first groove portion (7a) and which is embodied to be narrower in comparison thereto and extends between the transverse groove (7) and the other one of the two circumferential grooves (4),
**characterized in that**
the additional groove (8) is embodied to be shallower in comparison to the first groove portion (7a), wherein the groove base (13) of the transverse groove (7) has a base portion (13') which extends over the complete second groove portion (7b) and by way of an end portion (13'a) protrudes into the first groove portion (7a) and is provided with a local depression (14) which reaches up to the groove flanks (12, 13) and is at least partially formed in the end portion (13'a) or so as to be contiguous to the end portion (13'a), wherein the transverse groove (7) is embodied to be shallowest in the region of the base portion (13') outside the local depression (14).

2. Pneumatic vehicle tyre according to Claim 1, **characterized in that** the additional groove (8), viewed in top view and in terms of its groove centreline (m_{N}), runs at an angle (α') in relation to the axial direction, which deviates by at most 10°, in particular by at most 5°, particularly preferably by at most 2°, from the angle (α) at which the first groove portion (7a) runs in relation to the axial direction.

3. Pneumatic vehicle tyre according to Claim 1 or 2, **characterized in that** each profile block (6) on the transverse grooves (7) when the tyre rolls during forward travel (arrow R) has an incoming block edge (9) first entering the ground, and an outgoing block edge (10), wherein the incoming block edge (9) and the outgoing block edge (10) in each groove portion (7a, 7b) have in each case one block edge portion (9a, 9b, 10, 10b),
wherein the additional groove (8) has a first and a second groove edge (8a, 8b), wherein the first groove edge (8a) adjoins the block edge portion (10a) of the outgoing block edge (10) located in the first groove portion (7a), and the second groove edge (8b) adjoins the block edge portion (10b) located in the second groove portion (7b) of the outgoing block edge (10).

4. Pneumatic vehicle tyre according to Claim 3, **characterized in that** the first groove edge (8a), in top view, extends in a rectilinear extension of the adjoining block edge portion (10a) located in the first groove portion (7a).

5. Pneumatic vehicle tyre according to one of Claims 1 to 4, **characterized in that** the additional groove (8) has in the radial direction a depth (t_{N}) of 1.0 mm to 2.0 mm, in particular of 1.3 mm to 1.7 mm and/or a width (b_{N}) of 1.0 mm to 2.0 mm, in particular of 1.3 mm to 1.7 mm.

6. Pneumatic vehicle tyre according to one of Claims 1 to 5, **characterized in that** the second groove portion (7b) conjointly with the first groove portion (7a) - in terms of the groove centreline (m_{QR}) - encloses an angle (β) of 100° to 130°, preferably of 110° to 120°, especially preferably of 113° to 117°.

7. Pneumatic vehicle tyre according to one of Claims 1 to 6, **characterized in that** the local depression (14) - in terms of its volume - is formed at least largely in the second groove portion (7b).

8. Pneumatic vehicle tyre according to one of Claims 1 to 7, **characterized in that** the local depression (14) has a depth (tv) of 0.5 mm to 1.5 mm, in particular of 0.8 mm to 1.2 mm, and/or a length (l_{V}) of 1.5 mm to 4.0 mm determined along the groove centreline (m_{QR}).

9. Pneumatic vehicle tyre according to one of Claims 1 to 8, **characterized in that** the end portion (13'a) of the base portion (13') - in terms of the groove centreline m_{QR} - has a length (l'ₐ) projected in the axial direction of 40% to 60%, in particular of at least 50%, of the length (lₐ) of the first groove portion (7a) determined in an analogous manner.

10. Pneumatic vehicle tyre according to one of Claims 1 to 9, **characterized in that** the base portion (13') outside the local depression (14) extends at a constant depth (t₁) of 40% to 60% of the profile depth (T_{P}) determined in the radial direction.

11. Pneumatic vehicle tyre according to one of Claims 1 to 10, **characterized in that** the groove base (13) of the transverse groove (7) has a base portion (13") which extends exclusively in the first groove portion (7a) and from the height level of the profile depth (T₁) has a spacing (a₁) in the radial direction of at most 1.0 mm to 2.0 mm, and preferably descends in the direction towards the circumferential groove (5) into which the first groove portion (7a) opens.

12. Pneumatic vehicle tyre according to one of Claims 1 to 11, **characterized in that** the second groove portion (7b) extends to that circumferential groove (4) into which the first groove portion (7a) does not open.

13. Pneumatic vehicle tyre according to one of Claims 1 to 11, **characterized in that** a third groove portion (7c) adjoins the second groove portion (7b) within the profile block row (2), said third groove portion (7c) extending up to the circumferential groove (4) into which the first groove portion (7a) does not open, and being inclined in relation to the axial direction in the same direction as the first groove portion (7a), wherein the third groove portion (7) preferably
a. is narrower than the first groove portion (7a) and narrower than the second groove portion (7b), and/or
b. in terms of the groove centreline (m_{QR}) - extends in relation to the axial direction at an angle (γ) which deviates from the angle (α) at which the first groove portion (7a) extends in relation to the axial direction, by at most 5°, and/or
c. conjointly with the second groove portion (7b) - in terms of the groove centreline (m_{QR}) - encloses an obtuse angle (δ), and/or
d. in terms of the groove centreline (m_{QR}) has a length (l_{c}), projected in the axial direction, of 15% to 30%, in particular of 20% to 25%, of the width (b_{PB}), projected in the axial direction, of the central profile block row (2).

14. Pneumatic vehicle tyre according to one of Claims 1 to 13, **characterized in that** the first groove portion (7a) opens into a circumferential groove (5) delimiting the central profile block row (2) on the outside of the tread, and the additional groove (8) opens into a circumferential groove (4) delimiting the central profile block row (2) on the inside of the tread.

## Revendications

1. Pneu de véhicule pneumatique comportant une bande de roulement directionnelle avec au moins une rangée de pavés centraux (2), qui est délimitée des deux côtés par des rainures circonférentielles (4, 5) et qui comporte des pavés (6) qui sont séparés les uns des autres par des rainures transversales (7) qui s'étendent parallèlement les unes aux autres en vue en plan, qui débouchent dans les rainures circonférentielles (4, 5) et qui possèdent chacune une ligne centrale de rainure (m_{QR}), deux flancs de rainure (11, 12) et un fond de rainure (13),
les rainures transversales (7) comportant chacune une première partie de rainure (7a), qui débouche dans ladite une des rainures circonférentielles (5) et qui s'étend selon un angle (α) de 5° à 25° par rapport à la direction axiale et par rapport à la ligne centrale de rainure (m_{QR}), et une deuxième partie de rainure (7b), qui est adjacente à la première partie de rainure et qui est inclinée par rapport à la direction axiale dans la direction opposée par rapport à la première partie de rainure (7a),
les parties de rainure (7a, 7b) entrant en contact en premier avec la surface sous-jacente par leur zone de raccordement mutuel lorsque le pneu roule vers l'avant, une rainure supplémentaire (8) étant formée dans chaque pavé (6), ladite rainure s'étendant dans le prolongement de la première partie de rainure (7a) en vue en plan, étant plus étroite que celle-ci et s'étendant entre la rainure transversale (7) et l'autre des deux rainures circonférentielles (4),
**caractérisé en ce que**
la rainure supplémentaire (8) est moins profonde que la première partie de rainure (7a), le fond de rainure (13) de la rainure transversale (7) présentant une partie de fond (13') qui s'étend sur toute la deuxième partie de rainure (7b) et qui fait saillie dans la première partie de rainure (7a) par une partie d'extrémité (13'a), et qui est pourvue d'un creux local (14) s'étendant jusqu'aux flancs de rainure (12, 13), lequel est formé au moins partiellement dans la partie d'extrémité (13'a) ou est adjacent à la partie d'extrémité (13'a), la rainure transversale (7) étant la moins profonde dans la zone de la partie de fond (13') à l'extérieur du creux local (14).

2. Pneu de véhicule pneumatique selon la revendication 1, **caractérisé en ce que** la rainure supplémentaire (8), vue en plan et par rapport à sa ligne centrale de rainure (m_{N}), s'étend, par rapport à la direction axiale, selon un angle (α') qui diffère de l'angle (α) selon lequel la première partie de rainure (7a) s'étend par rapport à la direction axiale, d'au plus 10°, notamment d'au plus 5°, de préférence d'au plus 2°.

3. Pneu de véhicule pneumatique selon la revendication 1 ou 2, **caractérisé en ce que** chaque pavé (6) présente, au niveau des rainures transversales (7), un bord de pavé entrant (9) qui entre en premier en contact avec la surface sous-jacente lorsque le pneu roule vers l'avant (flèche R) et un bord de pavé sortant (10), le bord de pavé entrant (9) et le bord de pavé sortant (10) présentant chacun une partie de bord de pavé (9a, 9b, 10a, 10b) dans chaque partie de rainure (7a, 7b), la rainure supplémentaire (8) présentant un premier et un deuxième bord de rainure (8a, 8b),
le premier bord de rainure (8a) étant adjacent à la partie de bord de pavé (10a), située dans la première partie de rainure (7a), du bord de pavé sortant (10), et le deuxième bord de rainure (8b) étant adjacent à la partie de bord de pavé (10b), située dans la deuxième partie de rainure (7b), du bord de pavé sortant (10).

4. Pneu de véhicule pneumatique selon la revendication 3, **caractérisé en ce que** le premier bord de rainure (8a), vu en plan, s'étend dans le prolongement rectiligne de la partie de bord de pavé (10a) située dans la première partie de rainure (7a), à laquelle elle est adjacente.

5. Pneu de véhicule pneumatique selon l'une quelconque des revendications 1 à 4, **caractérisé en ce que** la rainure supplémentaire (8) présente, dans la direction radiale, une profondeur (t_{N}) de 1,0 mm à 2,0 mm, notamment de 1,3 mm à 1,7 mm, et/ou une largeur (b_{N}) de 1,0 mm à 2,0 mm, notamment de 1,3 mm à 1,7 mm.

6. Pneu de véhicule pneumatique selon l'une quelconque des revendications 1 à 5, **caractérisé en ce que** la deuxième partie de rainure (7b) forme avec la première partie de rainure (7a) - par rapport à la ligne centrale de rainure (m_{QR}) - un angle (β) de 100° à 130°, de préférence de 110° à 120°, et de manière particulièrement préférée de 113° à 117°.

7. Pneu de véhicule pneumatique selon l'une quelconque des revendications 1 à 6, **caractérisé en ce que** le creux local (14) est formé - par rapport à son volume - au moins en grande partie dans la deuxième partie de rainure (7b).

8. Pneu de véhicule pneumatique selon l'une quelconque des revendications 1 à 7, **caractérisé en ce que** le creux local (14) présente une profondeur (tv) de 0,5 mm à 1,5 mm, notamment de 0,8 mm à 1,2 mm, et/ou une longueur (l_{V}), mesurée le long de la ligne centrale de rainure (m_{QR}), de 1,5 mm à 4,0 mm.

9. Pneu de véhicule pneumatique selon l'une quelconque des revendications 1 à 8, **caractérisé en ce que** la partie d'extrémité (13'a) de la partie de fond (13') présente - par rapport à la ligne centrale de rainure m_{QR} - une longueur (l'ₐ), projetée dans la direction axiale, de 40 % à 60 %, notamment d'au moins 50 %, de la longueur (lₐ), déterminée de manière analogue, de la première partie de rainure (7a).

10. Pneu de véhicule pneumatique selon l'une quelconque des revendications 1 à 9, **caractérisé en ce que** la partie de fond (13'), à l'extérieur du creux local (14), s'étend à une profondeur constante (t₁), déterminée dans la direction radiale, de 40 % à 60 % de la profondeur de profil (T_{P}).

11. Pneu de véhicule pneumatique selon l'une quelconque des revendications 1 à 10, **caractérisé en ce que** le fond de rainure (13) de la rainure transversale (7) présente une partie de fond (13") qui s'étend exclusivement dans la première partie de rainure (7a) et qui présente, par rapport au niveau de la profondeur de profil (T₁) dans la direction radiale, une distance (a₁) d'au plus 1,0 mm à 2,0 mm et de préférence descend en direction de la rainure circonférentielle (5) dans laquelle débouche la première partie de rainure (7a).

12. Pneu de véhicule pneumatique selon l'une quelconque des revendications 1 à 11, **caractérisé en ce que** la deuxième partie de rainure (7b) s'étend jusqu'à la rainure circonférentielle (4) dans laquelle la première partie de rainure (7a) ne débouche pas.

13. Pneu de véhicule pneumatique selon l'une quelconque des revendications 1 à 11, **caractérisé en ce qu'**une troisième partie de rainure (7c) est adjacente à la deuxième partie de rainure (7b) à l'intérieur de la rangée de pavés (2), laquelle s'étend jusqu'à la rainure circonférentielle (4) dans laquelle la première partie de rainure (7a) ne débouche pas, et laquelle est inclinée, par rapport à la direction axiale, dans le même sens par rapport à la première partie de rainure (7a), dans lequel, de préférence, la troisième partie de rainure (7)
a. est plus étroite que la première partie de rainure (7a) et plus étroite que la deuxième partie de rainure (7b) et/ou
b. s'étend - par rapport à la ligne centrale de rainure (m_{QR}) - selon un angle (γ) par rapport à la direction axiale, qui diffère d'au plus 5° de l'angle (α) selon lequel la première partie de rainure (7a) s'étend par rapport à la direction axiale et/ou
c. forme avec la deuxième partie de rainure (7b) - par rapport à la ligne centrale de rainure (m_{QR}) - un angle obtus (δ) et/ou
d. présente une longueur (l_{c}), projetée dans la direction axiale par rapport à la ligne centrale de rainure (m_{QR}), de 15 % à 30 %, notamment de 20 % à 25 %, de la largeur (b_{PB}), projetée dans la direction axiale, de la rangée de pavés centraux (2).

14. Pneu de véhicule pneumatique selon l'une quelconque des revendications 1 à 13, **caractérisé en ce que** la première partie de rainure (7a) débouche dans une rainure circonférentielle (5) délimitant la rangée de pavés centraux (2) vers l'extérieur de la bande de roulement et **en ce que** la rainure supplémentaire (8) débouche dans une rainure circonférentielle (4) délimitant la rangée de pavés centraux (2) vers l'intérieur de la bande de roulement.
